## Europäisches Patentamt
## European Patent Office
## Office européen des brevets

(19)

(11) **EP 1 050 763 B1**

(12)

# FASCICULE DE BREVET EUROPEEN

(45) Date de publication et mention
de la délivrance du brevet:
**17.03.2004  Bulletin 2004/12**

(51) Int Cl.⁷: **G01T 1/164**, H04N 5/30

(21) Numéro de dépôt: **00401201.9**

(22) Date de dépôt: **02.05.2000**

(54) **Procédé de formation d'image**

Bilderzeugungsverfahren

Image forming method

(84) Etats contractants désignés:
**DE GB IT**

(30) Priorité: **06.05.1999  FR 9905775**

(43) Date de publication de la demande:
**08.11.2000  Bulletin 2000/45**

(73) Titulaire: **COMMISSARIAT A L'ENERGIE ATOMIQUE**
**75752 Paris Cédex 15 (FR)**

(72) Inventeurs:
 • **Koenig, Anne**
 **38410 Saint Martin d'Uriage (FR)**

 • **Dinten, Jean-Marc**
 **69008 Lyon (FR)**
 • **Gliere, Alain**
 **38000 Grenoble (FR)**
 • **Mestais, Corinne**
 **38660 La Terrasse (FR)**

(74) Mandataire: **Poulin, Gérard et al**
**Société BREVATOME**
**3, rue du Docteur Lancereaux**
**75008 Paris (FR)**

(56) Documents cités:
**US-A- 5 491 342        US-A- 5 508 524**
**US-A- 5 576 547**

**Description**

Domaine technique et art antérieur

L'invention concerne un procédé de formation d'une image obtenue par un dispositif de prises de vues comprenant un réseau de pixels détecteurs.

L'invention s'applique plus particulièrement au domaine de l'imagerie médicale utilisant des gamma-caméras intégrant un détecteur sous forme de réseau de pixels à base de matériau semi-conducteur CdZnTe ou CdTe.

Le réseau de pixels détecteurs d'une gamma-caméra est constitué de pixels régulièrement espacés, surmonté d'un collimateur préférentiellement à trous carrés.

Le collimateur est placé devant le réseau de pixels afin de ne conserver que le rayonnement d'incidence perpendiculaire à la surface des pixels. Les détecteurs à semi-conducteurs, convertissent directement l'énergie des photons gamma en porteurs de charges. La collecte des porteurs de charges est réalisée grâce à des contacts déposés sur chaque pixel auxquels on applique une haute tension de polarisation. L'amplification ainsi que la mise en forme du signal sont ensuite réalisés par un circuit électronique dont la sortie numérique fournit la valeur affectée au pixel image.

La réponse d'un pixel du réseau correspond donc à la somme des coups gamma reçus à la surface du pixel.

L'image produite par un détecteur de gamma-caméra constitué de pixels en matériau semi-conducteur CdZnTe ou CdTe a un aspect "mosaïque" très prononcé. Cet aspect "mosaïque" est très désavantageux par rapport à l'aspect continu de l'image que produit un détecteur d'Anger.

Un détecteur d'Anger permet de transformer les rayons gamma incidents en lumière, puis en impulsions électriques, de définir la localisation des photons gamma ayant interagi et de mesurer l'énergie déposée. Un détecteur d'Anger est constitué d'un collimateur, d'un cristal scintillateur, d'un guide de lumière, de tubes photomultiplicateurs et d'une électronique de localisation.

Les trous du collimateur, perpendiculaires à la surface du scintillateur, ne laissent passer que les rayons normaux au plan d'entrée du détecteur. L'ensemble scintillateur et guide de lumière permet de transformer les photons gamma incidents en photons lumineux et de répartir la distribution de lumière sur plusieurs photomultiplicateurs. Les photons lumineux sont émis de façon isotrope, leur nombre suit une loi de Poisson. Les photomultiplicateurs transforment ces photons lumineux en électrons dont le nombre est ensuite multiplié par des dynodes. Le nombre de photoélectrons émis suit aussi une loi de Poisson.

L'électronique de localisation calcule un barycentre des contributions des photomultiplicateurs dont les poids correspondent à leur position géographique sur le cristal et l'image résultante est ensuite créée en échantillonnant ces réponses.

Un but de l'invention est de mettre en oeuvre une méthode permettant que les images issues d'un réseau de pixels détecteurs de gamma-caméra soient d'une qualité semblable aux images issues d'une caméra d'Anger.

L'invention concerne un procédé de formation d'une image obtenue à partir d'un réseau de pixels détecteurs comprenant au moins un pixel détecteur, l'image formée étant constituée d'au moins un ensemble de P pixels image pour chaque pixel détecteur. Le procédé comprend :

- une étape permettant de créer N pixels élémentaires à partir d'un pixel détecteur, N étant un nombre entier inférieur ou égal à P, et
- une étape de répartition aléatoire des coups reçus par chaque pixel détecteur dans les N pixels image qui lui correspondent.

Un avantage de l'invention est de supprimer l'aspect "mosaïque" de l'image produite par une gamma-caméra.

Brève description des figures

D'autres caractéristiques et avantages de l'invention apparaîtront à la lecture de modes de réalisation préférentiels faits en référence aux figures jointes parmi lesquelles :

- la figure 1 représente les différentes étapes d'un premier mode de réalisation du procédé de formation d'une image selon l'invention,
- les figures 2a et 2b représentent chacune une variante d'un deuxième mode de réalisation du procédé de formation d'une image selon l'invention.

Sur toutes les figures, les mêmes références désignent les mêmes éléments.

Description détaillée de modes de mise en oeuvre de l'invention

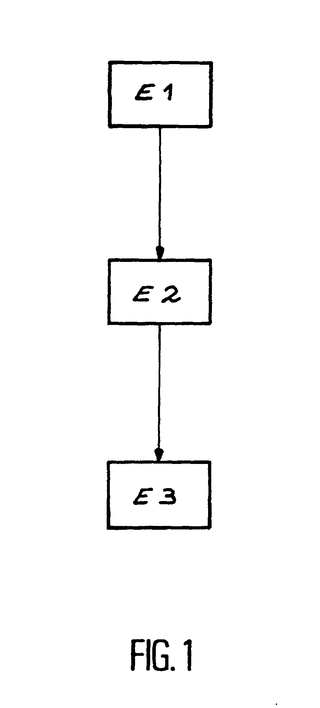

La figure 1 représente les différentes étapes E1, E2, E3 d'un premier mode de réalisation du procédé de formation d'une image selon l'invention.

Une première étape E1 est une étape d'acquisition d'informations par chacun des pixels détecteurs.

Une deuxième étape E2, succédant à l'étape E1, consiste à créer P pixels image pour chacun des pixels détecteurs, P étant un nombre entier supérieur ou égal à 2.

Selon le mode de réalisation préférentiel de l'invention, l'étape E2 permet de construire, à partir de pixels détecteurs de gamma-caméra, une image dont les pixels image ont la taille des pixels image d'une caméra d'Anger.

Les pixels à base de semi-conducteur CdZnTe d'une gamma-caméra peuvent, par exemple, avoir une taille de 3,9x3,9 mm$^2$ et être disposés selon un pas de 4,445 mm. La taille habituelle des pixels image d'une caméra d'Anger est de 0,1x0,1 mm2. Selon l'invention, à titre d'exemple non limitatif, il s'ensuit que les P pixels image issus de l'étape E2 peuvent constituer une matrice carrée de 42x42 pixels image. L'étape E2 est alors une étape de sur-échantillonnage de rapport 42 selon les deux directions perpendiculaires qui définissent la matrice carrée de pixels image.

L'étape E2 de sur-échantillonnage peut être mise en oeuvre par différentes méthodes d'interpolation.

Une troisième étape E3 consiste à récupérer les coups reçus par chaque pixel détecteur de façon à les redistribuer de façon aléatoire dans les P pixels image qui lui correspondent. Selon cette troisième étape, l'information issue d'un pixel détecteur est préférentiellement répartie selon une loi uniforme. La distribution de l'information est alors une distribution de Poisson.

Cette troisième étape permet avantageusement à l'image formée d'avoir un "piqué" très proche de celui d'une image obtenue par une caméra d'Anger.

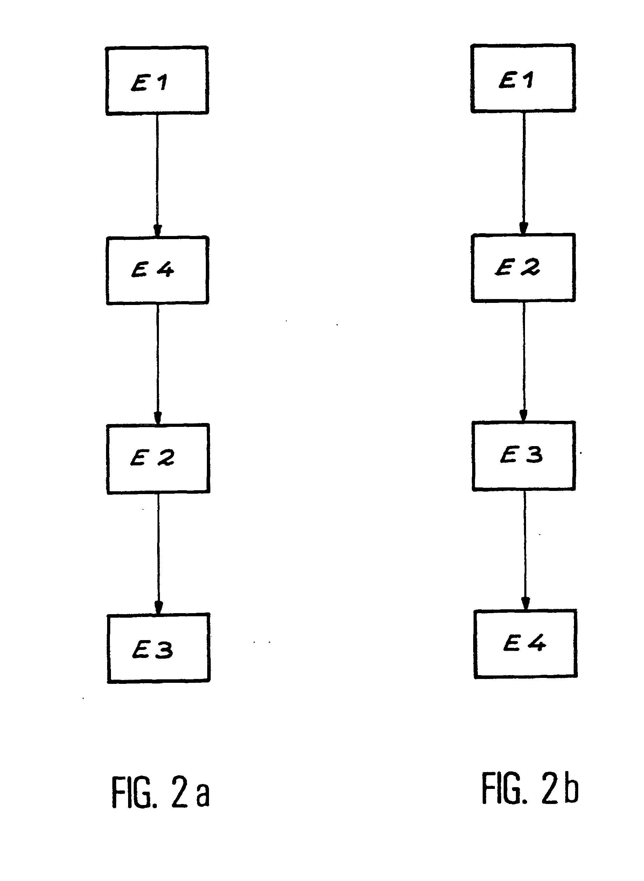

Les figures 2a et 2b représentent chacune une variante d'un deuxième mode de réalisation du procédé de formation d'une image selon l'invention.

Selon le deuxième mode de réalisation du procédé de formation d'une image selon l'invention, il est possible d'atténuer ou de supprimer, sur l'image formée, les limites visibles de chaque pixel détecteur.

A cette fin, une étape supplémentaire d'interpolation bicubique est effectuée. L'interpolation bicubique permet de trouver une fonction d'interpolation cubique pour les coordonnées d'échantillonnage x et y d'une image I : elle conserve les valeurs de l'image, des dérivées première $\frac{\partial I}{\partial x}$, $\frac{\partial I}{\partial y}$ et croisée $\frac{\partial^2 I}{\partial x \partial y}$ aux points initiaux de l'échantillonnage et permet que ces valeurs varient de façon continue aux frontières des pixels.

Selon une première variante du deuxième mode de réalisation de l'invention, l'étape d'interpolation bicubique E4 précède une étape de sur-échantillonnage E2. Cette première variante est illustrée en figure 2a.

L'étape d'interpolation bicubique E4 permet alors de créer P1 premiers pixels intermédiaires à partir de chaque pixel détecteur et l'étape de sur-échantillonnage E2 permet de créer P2 deuxièmes pixels intermédiaires à partir de chaque premier pixel intermédiaire, le produit P1xP2 étant égal à P.

L'étape d'interpolation bicubique est une étape d'interpolation de rapport Nb et l'étape de sur-échantillonnage une étape d'interpolation de rapport Ns. Selon l'exemple mentionné précédemment, pour lequel chaque pixel détecteur est divisé en P pixels image constituant une matrice carrée de 42x42 pixels image, les rapports d'interpolation Nb et Ns peuvent être, par exemple, respectivement égaux à 6 et 7.

De façon générale, dans le cas où les P pixels image constituent une matrice carrée de nxn pixels image, les rapport Nb et Ns sont tels que : NbxNs=n.

Selon la première variante du deuxième mode de réalisation du procédé de l'invention, l'étape E3 de répartition des coups reçus est effectuée après l'étape E2.

Selon l'invention, l'impression visuelle donnée par l'image résultante est dépourvue de l'effet de frontière pixel. Par ailleurs, comme cela a été mentionné précédemment, l'image formée a un "piqué" très proche de celui obtenu par une caméra d'Anger.

Avantageusement, le choix des poids respectifs des rapports Nb et Ns permet de définir le rapport signal sur bruit de l'image formée. Un tel choix est un moyen simple et efficace du réglage du "piqué" de l'image.

Selon la deuxième variante du deuxième mode de réalisation de l'invention, l'étape d'interpolation bicubique succède à l'étape de répartition aléatoire E3. Cette deuxième variante est illustrée en figure 2b.

Selon cette deuxième variante, l'étape E2 du procédé de formation d'une image selon l'invention permet de créer N pixels, N étant un nombre inférieur à P.

L'étape d'interpolation bicubique E4 permet de créer P3 pixels intermédiaires à partir de chacun des N pixels élémentaires, le produit NxP3 étant égal à P.

De façon générale, de même que pour la première variante, dans le cas où les P pixels image constituent une matrice carrée de nxn pixels image, l'étape de sur-échantillonnage E2 et l'étape d'interpolation bicubique E4 sont des étapes d'interpolation de rapports respectifs Ns et Nb tels que NsxNb=n, avec P=nxn.

**Revendications**

1. Procédé de formation d'une image (I) obtenue à partir d'un réseau de pixels détecteurs comprenant au moins un pixel détecteur, l'image formée étant constituée d'au moins un ensemble de P pixels image pour chaque pixel détecteur, **caractérisé en ce que** qu'il comprend successivement :

   - une étape (E2) permettant de créer N pixels élémentaires à partir d'un pixel détecteur, N étant un nombre entier inférieur ou égal à P, et,
   - une étape (E3) de répartition aléatoire des coups reçus par un pixel détecteur dans les N pixels élémentaires qui lui correspondent.

2. Procédé selon la revendication 1, **caractérisé en ce que** l'étape permettant de créer N pixels élémentaires à partir d'un pixel détecteur est une étape de sur-échantillonnage du pixel détecteur de sorte qu'un pixel élémentaire constitue un pixel image, autrement dit N = P.

**3.** Procédé selon la revendication 1, **caractérisé en ce que** l'étape (E2) permettant de créer N pixels élémentaires à partir d'un pixel détecteur comprend successivement :

- une étape d'interpolation (E4) permettant de créer P1 premiers pixels intermédiaires à partir de chaque pixel détecteur et permettant d'atténuer ou de supprimer les limites visibles de chaque pixel détecteur,
- une étape de sur-échantillonnage (E2) permettant de créer P2 deuxièmes pixels intermédiaires à partir de chaque premier pixel intermédiaire, le produit P1xP2 étant égal à P, de sorte qu'un pixel élémentaire constitue un pixel image, autrement dit N = P.

**4.** Procédé selon la revendication 3, **caractérisé en ce que** l'étape d'interpolation (E4) permettant de créer P1 premiers pixels intermédiaires à partir de chaque pixel détecteur et permettant d'atténuer ou de supprimer les limites visibles de chaque pixel détecteur est une étape d'interpolation bicubique.

**5.** Procédé selon la revendication 1, **caractérisé en ce qu'**il comprend une étape supplémentaire qui succède à l'étape (E3) de répartition aléatoire des coups reçus par un pixel détecteur, l'étape supplémentaire étant une étape d'interpolation (E4) permettant de créer P3 pixels intermédiaires à partir de chacun des N pixels élémentaires et permettant d'atténuer ou de supprimer les limites visibles de chaque pixel détecteur, le produit NxP3 étant égal à P.

**6.** Procédé selon la revendication 5, **caractérisé en ce que** l'étape d'interpolation (E4) permettant de créer P3 pixels intermédiaires à partir de chacun des N pixels élémentaires et permettant d'atténuer ou de supprimer les limites visibles de chaque pixel détecteur est une étape d'interpolation bicubique.

**7.** Procédé selon l'une quelconque des revendications précédentes, **caractérisé en ce que** l'étape de répartition aléatoire met en oeuvre la répartition des coups reçus selon une distribution de Poisson.

**8.** Procédé selon l'une quelconque des revendications précédentes, **caractérisé en ce que** les pixels détecteurs sont des pixels en matériau semi-conducteur CdZnTe ou CdTe.

**9.** Procédé selon l'une quelconque des revendications précédentes, **caractérisé en ce qu'**un ensemble de P pixels image constitue une matrice carrée de nxn pixels image.

**10.** Procédé selon la revendication 9,

**caractérisé en ce que** n=42.

## Claims

**1.** Process for the formation of an image (I) obtained from an array of detector pixels comprising at least one detector pixel, the image formed constituted by at least one set of P image pixels for each detector pixel, **characterized in that** it successively comprises:

- a stage (E2) making it possible to create N elementary pixels from one detector pixel, N being an integer equal to or lower than P and
- a stage (E3) of the random distribution of events received by a detector pixel in the N elementary pixels corresponding thereto.

**2.** Process according to claim 1, **characterized in that** the stage making it possible to create N elementary pixels from one detector pixel is a detector pixel oversampling stage, so that an elementary pixel constitutes an image pixel, in other words N. = P.

**3.** Process according to claim 1, **characterized in that** stage (E2) making it possible to create N elementary pixels from one detector pixel successively comprises:

- an interpolation stage (E4) making it possible to create P1 first, intermediate pixels from each detector pixel and making it possible to attenuate or eliminate the visible limits of each detector pixel,
- an oversampling stage (E2) making it possible to create P2 second, intermediate pixels from each first, intermediate pixel, the product P1xP2 being equal to P, so that an elementary pixel constitutes an image pixel, in other words N = P.

**4.** Process according to claim 3, **characterized in that** the interpolation stage (E4) making it possible to create P1 intermediate pixels from each detector pixel and making it possible to attenuate or eliminate the visible limits of each detector pixel is a bicubic interpolation stage.

**5.** Process according to claim 1, **characterized in that** it comprises a supplementary stage succeeding the stage (E3) of the random distribution of the events received by a detector pixel, the supplementary stage being an interpolation stage (E4) making it possible to create P3 intermediate pixels from each of the N elementary pixels and making it possible to attenuate or eliminate the visible limits of each detector pixel, the product NxP3 being equal to P.

6. Process according to claim 5, **characterized in that** the interpolation stage (E4) making it possible to create P3 intermediate pixels from each of the N elementary pixels and making it possible to attenuate or eliminate the visible limits of each detector pixel is a bicubic interpolation stage.

7. Process according to any one of the preceding claims, **characterized in that** the random distribution stage involves a Poisson's distribution of the events received.

8. Process according to any one of the preceding claims, **characterized in that** the detector pixels are CdZnTe or CdTe semiconductor material pixels.

9. Process according to any one of the preceding claims, **characterized in that** a set of P image pixels constitutes a square matrix of nxn image pixels.

10. Process according to claim 9, **characterized in that** n=42.

**Patentansprüche**

1. Verfahren zur Erzeugung eines Bildes (I) aus einem Netz von Detektorpixeln, das mindestens ein Detektorpixel umfaßt, wobei das erzeugte Bild aus mindestens einem Satz von P Bildpixeln pro Detektorpixel besteht, **dadurch gekennzeichnet, daß** es nacheinander nachfolgende Phasen umfaßt:

   - eine Phase (E2), in der, ausgehend von einem Detektorpixel, N Elementarpixel erzeugt werden können, wobei N eine ganze Zahl kleiner oder gleich P ist, sowie:

   - eine Phase (E3), in der die von einem Detektorpixel empfangenen Impulse nach dem Zufallsprinzip unter den dazugehörigen N Elementarpixeln verteilt werden.

2. Verfahren nach Anspruch 1, **dadurch gekennzeichnet, daß** es sich bei der Phase, in der N Elementarpixel aus einem Detektorpixel erzeugt werden können, um eine Phase der Überabtastung des Detektorpixels handelt, so daß ein Elementarpixel ein Bildpixel bildet; oder anders ausgedrückt: N = P.

3. Verfahren nach Anspruch 1, **dadurch gekennzeichnet, daß** die Phase (E2), in der aus einem Detektorpixel N Elementarpixel gebildet werden können, nacheinander folgende Phasen umfaßt:

   - eine Interpolationsphase (E4), in der aus jedem Detektorpixel P1 erste Zwischenpixel erzeugt werden können und in der es möglich ist, die sichtbaren Begrenzungen eines jeden Detektorpixels zu dämpfen oder zu unterdrücken,

   - eine Phase der Überabtastung (E2), in der aus jedem ersten Zwischenpixel P2 zweite Zwischenpixel erzeugt werden können, wobei das Produkt aus P1 x P2 gleich P ist, so daß ein Elementarpixel ein Bildpixel bildet; oder anders ausgedrückt: N = P.

4. Verfahren nach Anspruch 3, **dadurch gekennzeichnet, daß** es sich bei der Interpolationsphase (E4), in der aus jedem Detektorpixel P1 erste Zwischenpixel gebildet werden können und in der es möglich ist, die sichtbaren Begrenzungen eines jeden Detektorpixels zu dämpfen oder zu unterdrükken, um eine bikubische Interpolationsphase handelt.

5. Verfahren nach Anspruch 1, **dadurch gekennzeichnet, daß** es eine zusätzliche Phase umfaßt, die auf die Phase (E3) folgt, in der die auf ein Detektorpixel auftreffenden Impulse nach dem Zufallsprinzip verteilt werden, wobei es sich bei dieser zusätzlichen Phase um eine Interpolationsphase (E4) handelt, in der aus jedem der N Elementarpixel P3 Zwischenpixel erzeugt werden können und in der es möglich ist, die sichtbaren Begrenzungen eines jeden Detektorpixels zu dämpfen oder zu unterdrücken, wobei das Produkt aus N x P3 gleich P ist.

6. Verfahren nach Anspruch 5, **dadurch gekennzeichnet, daß** es sich bei der Interpolationsphase (E4), in der aus jedem der N Elementarpixel P3 Zwischenpixel erzeugt werden können und in der es möglich ist, die sichtbaren Begrenzungen eines jeden Zwischenpixels zu dämpfen oder zu unterdrükken, um eine bikubische Interpolationsphase handelt.

7. Verfahren nach einem der vorherigen Ansprüche, **dadurch gekennzeichnet, daß** in der Phase der Verteilung nach dem Zufallsprinzip die eintreffenden Impulse nach dem Poisson-Prinzip verteilt werden.

8. Verfahren nach einem der vorherigen Ansprüche, **dadurch gekennzeichnet, daß** es sich bei den Detektorpixeln um Pixel aus den Halbleitermaterialien CdZnTe bzw. CdTe handelt.

9. Verfahren nach einem der vorherigen Ansprüche, **dadurch gekennzeichnet, daß** ein Komplex aus P Bildpixeln eine viereckige Matrix aus n x n Bildpixeln darstellt.

**10.** Verfahren nach Anspruch 9, **dadurch gekennzeichnet, daß** n = 42 ist.

E 1

E 2

E 3

FIG. 1

FIG. 2a

FIG. 2b